Europäisches Patentamt

European Patent Office

Office européen des brevets

(11) Veröffentlichungsnummer: **0 313 929 B1**

(12) **EUROPÄISCHE PATENTSCHRIFT**

(45) Veröffentlichungstag der Patentschrift: **03.06.92**

(51) Int. Cl.5: **H02P 5/40**

(21) Anmeldenummer: **88117027.8**

(22) Anmeldetag: **13.10.88**

(54) **Verfahren zur Vermeidung eines Stromeinbruches in einem nicht an der Kommutierung beteiligten Strang einer dreiphasigen, blockstromgespeisten Synchronmaschine und Schaltungsanordnung zur Durchführung des Verfahrens.**

(30) Priorität: **26.10.87 DE 3736213**

(43) Veröffentlichungstag der Anmeldung:
**03.05.89 Patentblatt 89/18**

(45) Bekanntmachung des Hinweises auf die
Patenterteilung:
**03.06.92 Patentblatt 92/23**

(84) Benannte Vertragsstaaten:
**CH DE FR IT LI**

(56) Entgegenhaltungen:
**EP-A- 0 085 541**
**EP-A- 0 104 909**
**EP-A- 0 208 847**
**DE-A- 2 915 987**

(73) Patentinhaber: **SIEMENS AKTIENGESELL-SCHAFT**
**Wittelsbacherplatz 2**
**W-8000 München 2(DE)**

(72) Erfinder: **Hamman, Jens, Dr.**
**Steinacher Strasse 22a**
**W-8510 Fürth(DE)**
Erfinder: **Vogt, Hartmut, Dipl.-Ing.**
**Anna-Hermann-Strasse 34**
**W-8522 Herzogenaurach(DE)**

## Beschreibung

Die Erfindung bezieht sich auf ein Verfahren zur Vermeidung eines Stromeinbruches in einem nicht an der Kommutierung beteiligten Strang einer dreiphasigen, blockstromgespeisten Synchronmaschine, während die Strangströme der beiden anderen Stränge kommutieren und eine Schaltungsanordnung zur Durchführung des Verfahrens.

Synchronmaschinen mit trapezförmiger elektromotorischer Kraft (EMK) erzeugen bei Speisung mit blockförmigen Strömen ein konstantes Moment. Deshalb werden derartige Maschinen bei Drehstrom-Vorschub-Antrieben eingesetzt. Die blockförmigen Ströme werden mittels eines Stromrichters erzeugt, wobei mit Hilfe eines Steuersatzes und einer Steuerspannung ein umlaufendes Feld in der Maschine erzeugt wird. Außerdem ist das Moment proportional zum Maschinenstrom. Es wurde festgestellt, daß Drehmomenteinbrüche durch Stromeinbrüche in einem nicht an der Kommutierung beteiligten Strang während der Kommutierung der beiden anderen Strangströme der dreiphasigen, blockstromgespeisten Synchronmaschine verursacht werden.

Der Erfindung liegt nun die Aufgabe zugrunde, ein Verfahren zur Vermeidung eines Stromeinbruches in einem nicht an der Kommutierung beteiligten Strang einer dreiphasigen, blockstromgespeisten Synchronmaschine während die beiden anderen Strangströme in den beiden anderen Strängen kommutieren und eine Schaltungsanordnung zur Durchführung des Verfahrens anzugeben, wobei die Drehmomentwelligkeit einer blockstromgespeisten Synchronmaschine erheblich verringert wird.

Diese Aufgabe wird erfindungsgemäß dadurch gelöst, daß während der Kommutierung zweier Strangströme eine die Synchronmaschine steuernde Steuerspannung derart mit einer zusätzlichen Steuerspannung beaufschlagt wird, daß im Mittel der Stromabstieg im abkommutierenden Strang gleich ist im Mittel dem negativen Stromanstieg im aufkommutierenden Strang, insbesondere durch die Merkmale des Anspruches 1.

Da die Ströme in den an der Kommutierung beteiligten Stränge im Mittel nicht gleichmäßig auf- bzw. abkommutieren, liegt am abkommutierenden Strang im Mittel eine größere Spannung als am aufkommutierenden Strang. Während der Strom im abkommutierenden Strang bereits Null ist, hat der aufkommutierende Strom zu diesem Zeitpunkt beispielsweise erst 80 % seines Sollwertes erreicht. Das hat zur Folge, daß der Strom und die Leistung im an der Kommutierung nicht beteiligten Strang einbricht. Damit der Stromeinbruch im nicht an der Kommutierung beteiligten Strang wesentlich verringert wird, wird die Steuerspannung des Stromrichters der Synchronmaschine während der Kommutierung zweier Strangströme mit einer zusätzlichen Steuerspannung beaufschlagt, wobei die Amplitude so eingestellt wird, daß im Mittel der Stromabstieg im abkommutierenden Strang gleich ist im Mittel dem negativen Stromanstieg im aufkommutierenden Strang.

Bei einer blockstromgespeisten Synchronmaschine, wobei pulsbreitenmodulierte Impulse für den Stromrichter der Synchronmaschine mittels einer hochfrequenten, dreieckförmigen Abtastspannung und einer Steuerspannung erzeugt werden, indem die beiden Spannungen überlagert werden, kann die Amplitude der zusätzlichen Steuerspannung aus der Beziehung

$$a_z = \frac{1}{3} + \frac{2}{3}\,\frac{e}{U_d}$$

abgeleitet werden, wobei

    e =     max. elektromotorische Kraft (EMK) für eine Drehzahl n,

    $U_d$ =     Zwischenkreisspannung des Stromrichters

ist. Dabei wurde der ohmsche Spannungsabfall i•R je Strang vernachlässigt, da dieser Spannungsabfall i•R ≪ $U_d$/3.

Im unteren Drehzahlband eines Drehstrom-Vorschub-Antriebes ist die elektromotorische Kraft e ≪ $U_d$, womit der zweite Summand der Beziehung für die Ermittlung der Amplitude der zusätzlichen Steuerspannung gegen Null geht. Dadurch kann man bei einem Drehstrom-Vorschub-Antrieb, dessen Stromrichter mit pulsbreitenmodulierten Impulsen, die durch Überlagerung einer hochfrequenten dreieckförmigen Abtastspannung und einer Steuerspannung entstehen, gesteuert wird, die Amplitude der zusätzlichen Steuerspannung zu 1/3 $U_{Soll\ max.}$ wählen.

Durch die zusätzliche Steuerspannung, die nur während der Kommutierung der die Synchronmaschine steuernde Steuerspannung überlagert wird, wird erreicht, daß die Stromeinbrüche in einem nicht an der Kommutierung beteiligten Strang wesentlich verringert werden, wodurch die Drehmomentwelligkeit erheblich verkleinert wird.

Da während der Kommutierung zweier Strangströme die zusätzliche Steuerspannung der die Synchronmaschine steuernden Steuerspannung beaufschlagt wird, muß der Kommutierungsanfang und das Kommutierungsende ermittelt werden.

Der Kommutierungsanfang wird aus vorhandenen Lagesignalen, die am Ausgang eines mit der Synchronmaschine verknüpften Rotorlagegebers anstehen, ermittelt. Ein Signal, das den Kommutierungsanfang dokumentiert, betätigt einen Schalter, wodurch die zusätzliche Steuerspannung der Steuerspannung des Stromrichters überlagert wird.

Das Kommutierungsende wird aus der Messung des abkommutierenden Stromes ermittelt, wobei dieser abkommutierende Strom auf einen Grenzwert überwacht wird. D.h., sobald der abkommutierende Strom den Wert Null erreicht hat, betätigt ein Signal den Schalter derart, daß die zusätzliche Steuerspannung nicht mehr die Steuerspannung überlagert.

Das Kommutierungsende kann auch aus der Beziehung

$$T_K = \frac{|J| \quad 3 \quad L_D}{U_d + 2 \quad e}$$

ermittelt werden, wobei

$T_K$ = Kommutierungszeit,

$|J|$ = Betrag eines abkommutierenden Stromes,

$U_d$ = Zwischenkreisspannung des Stromrichters,

$e$ = max. elektromotorische Kraft (EMK) für eine Drehzahl n,

$L_D$ = Drehstrominduktivität
ist.

Bei einer vorteilhaften Schaltungsanordnung zur Durchführung des Verfahrens mit einer blockstromgespeisten Synchronmaschine gemäß Anspruch 3, die mit einem Stromrichter, einem Tachogenerator, einem Rotorlagegeber und einem Regler versehen ist, wobei der Ausgang des Reglers mit einem Eingang eines Steuersatzes des Stromrichters verknüpft ist, ist zwischen dem Ausgang des Reglers und dem Eingang des Steuersatzes ein Summierglied angeordnet, dessen zweiter Eingang über einen Schalter mit einer Vorrichtung zur Erzeugung einer zusätzlichen Steuerspannung verknüpft ist, wobei dieser Schalter über eine Kommutierungserfassung, die mit dem Ausgang des Rotorlagegebers verknüpft ist, einschaltbar und über eine Vorrichtung zur Ermittlung des Kommutierungsendes ausschaltbar ist.

Mit dieser Schaltungsanordnung kann über den gesamten Drehzahlbereich des Drehstrom-Vorschub-Antriebes in Abhängigkeit der Drehzahl eine zusätzliche Steuerspannung erzeugt werden, die während der Kommutierung zweier Strangströme der Steuerspannung des Steuersatzes überlagert wird. Dabei wird der Kommutierungsanfang aus den vorhandenen Lagesignalen mittels einer bekannten Schaltungsanordnung ermittelt. Das Kommutierungsende wird aus dem Verlauf des gemessenen abkommutierenden Stromes abgeleitet, d.h. das Kommutierungsende ist erreicht, sobald der abkommutierende Strom gleich Null ist. Somit erhält man eine Schaltungsanordnung mit der man, bezogen auf den gesamten Drehzahlbereich der Synchronmaschine, die Drehmomentwelligkeit erheblich verringern kann.

In einer besonders einfachen Schaltungsanordnung ist als zusätzliche Steuerspannung eine Spannungsquelle vorgesehen, deren Ausgangsspannung den Wert $1/3 \ U_{Soll \ max.}$ hat. Die Ausgangsspannung dieser Spannungsquelle wird über den Schalter, während der Kommutierung zweier Strangströme, der Steuerspannung überlagert. Dadurch wird auch die Drehmomentwelligkeit erheblich verringert, jedoch nur bei Drehzahlen, die zum unteren Drehzahlband des Drehstrom-Vorschub-Antriebes gehören.

Zur weiteren Erläuterung der Erfindung wird auf die Zeichnung Bezug genommen, in der Ausführungsbeispiele nach der Erfindung schematisch veranschaulicht sind.

FIG 1 zeigt eine Schaltungsanordnung zur Durchführung des erfindungsgemäßen Verfahrens, in

FIG 2 ist eine weitere Vorrichtung zur Ermittlung des Kommutierungsendes dargestellt und die

FIG 3 veranschaulicht eine besonders einfache Schaltungsanordnung zur Durchführung des erfindungsgemäßen Verfahrens.

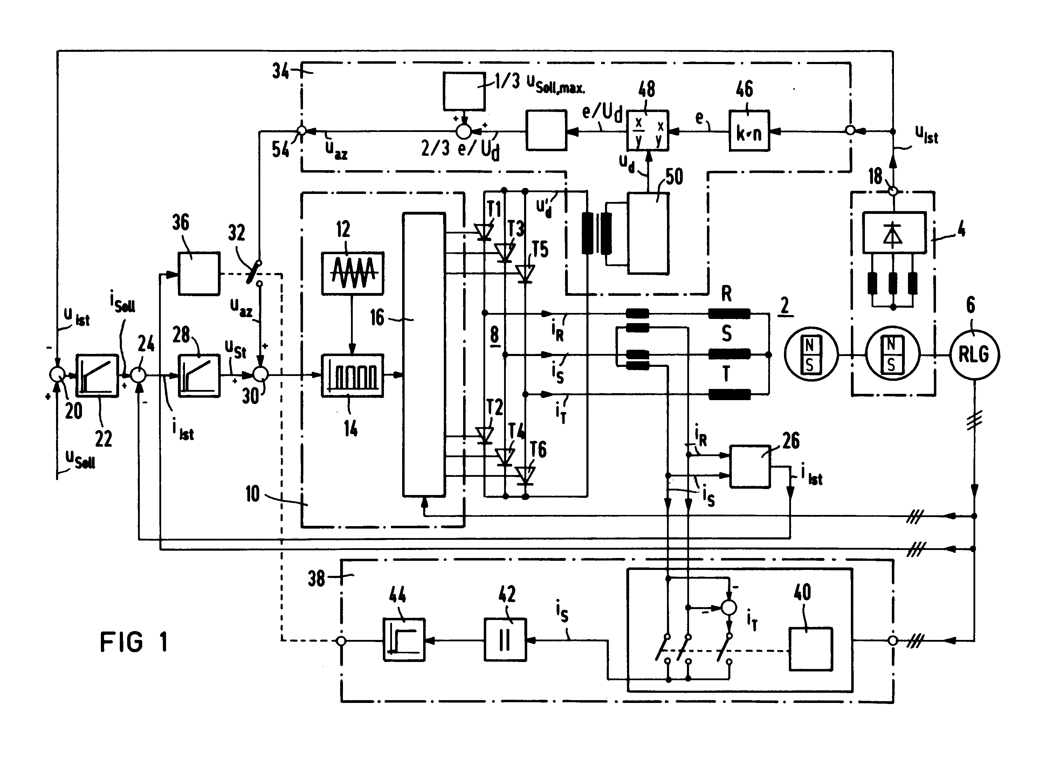

In FIG 1 ist eine Synchronmaschine 2 mit einem nachgeschalteten Tachogenerator 4 und einem Rotorlagegeber 6 veranschaulicht, wobei die Ständerstränge R, S und T der Synchronmaschine 2 mit einem Stromrichter 8 verknüpft sind. Der Stromrichter 8 ist als sechs-pulsige Brückenschaltung mit den Halbleiterventilen T1 bis T6 aufgebaut, wobei auf die Freilaufdioden aus Übersichtlichkeitsgründen verzichtet wurde. Die Zündsignale für die Halbleiterventile T1 bis T6 des Stromrichters 8 werden in Abhängigkeit einer Steuerspannung $u_{St}$ in einem Steuersatz 10 erzeugt. Dabei enthält der Steuersatz 10 einen Pulsfrequenzgenerator 12, der eine dreieckförmige, hochfrequente Abtastspannung liefert, einen Pulsbreitenmodulator 14 und eine Impuls-Verteillogik 16. Als Pulsfrequenzgenerator 12 können auch Generatoren vorgesehen sein, die eine Sägezahnspannung oder eine unsymmetrische Dreieckspannung als Abtastspannung liefern. Im Pulsbreitenmodulator 14 wird aus der Steuerspannung und der Abtastspannung ein pulsbreitenmoduliertes Signal erzeugt, das der Impuls-Verteillogik 16 zugeführt wird. Dieses impulsbreitenmodulierte Signal wird dann auf die Steuereingänge der Halbleiterventile T1 bis T6 verteilt.

Bei dieser Synchronmaschine 2 ist eine Drehzahlregelung mit unterlagerter Stromregelung vorgesehen. Die Drehzahl der Synchronmaschine 2 wird mittels des Tachogenerators 4 erfaßt, an dessen Ausgang 18 eine drehzahlproportionale Spannung $u_{Ist}$ als Drehzahl-Istwert ansteht. Dieser Drehzahl-Istwert $u_{Ist}$ wird einer Vergleichsstelle 20 mit zwei Eingängen zugeführt. Am Minus-Eingang steht der Ist-Wert $u_{Ist}$ der Drehzahl n und am Plus-Eingang steht der Soll-Wert $u_{Soll}$ an. Am Ausgang der Vergleichsstelle 20 steht eine Regeldifferenz bzw. eine Drehzahldifferenz an, die einem Drehzahlregler 22 zugeführt wird. Als Drehzahlregler ist ein PI-Regler vorgesehen. Am Ausgang dieses Drehzahlreglers 22 kann man einen Strom-Sollwert $i_{Soll}$ abnehmen, der einer zweiten Vergleichsstelle 24 mit zwei Eingängen zugeführt wird. Am Plus-Eingang dieser Vergleichsstelle 24 steht der Strom-Sollwert $i_{Soll}$ an und dem Minus-Eingang dieser Vergleichsstelle 24 ist ein Strom-Istwert $i_{Soll}$ zugeführt. Dieser Strom-Istwert $i_{Ist}$ ist aus zwei Strangströmen $i_R$ und $i_S$ mittels einer Einrichtung 26 zur Strom-Istwertbildung gebildet worden. Eine derartige Einrichtung 26 zur Strom-Istwertbildung bei dreiphasiger Blockstromspeisung ist aus der europäischen Patentanmeldung EP-A-0 208 847 bekannt. Die Regeldifferenz bzw. Stromdifferenz dieser zweiten Vergleichsstelle 24 wird einem Stromregler 28 zugeführt. Auch dieser Stromregler 28 ist ein PI-Regler, an dessen Ausgang die Steuerspannung $u_{St}$ für den Steuersatz 10 ansteht.

Diese Steuerspannung $u_{St}$ wird nicht direkt dem Steuersatz 10 zugeführt, sondern über ein Summierglied 30. Am zweiten Eingang dieses Summiergliedes 30 ist über einen Schalter 32 eine Vorrichtung 34 zur Erzeugung einer zusätzlichen Steuerspannung $u_{az}$ angebunden. Der Schalter 32 wird einerseits von einer Kommutierungserfassung 36 und andererseits von einer Vorrichtung 38 zur Ermittlung des Kommutierungsendes betätigt. Der Zugriff zum Schalter 32 ist jeweils durch eine Strich-Punkt-Linie dargestellt. Dabei wird der Schalter 32 von der Kommutierungserfassung 36 eingeschaltet und von der Vorrichtung 38 zur Ermittlung des Kommutierungsendes ausgeschaltet. Dabei wird der Kommutierungserfassung 36 und der Vorrichtung 38 die Lagesignale des Rotorlagegebers 6 zugeführt. Der Rotorlagegeber 6 erzeugt drei jeweils um 120° gegeneinander versetzte binäre Lagesignale, die mit den Stromblöcken der Synchronmaschine 2 synchronisiert sind. Mit Hilfe dieser Lagesignale und der Kommutierungserfassung 36, die im einfachsten Falle eine Auswerteelektronik für die Flanken der Lagesignale sein kann, wird der Kommutierungsanfang ermittelt und der Schalter 32 geschlossen. Dadurch wird der Steuerspannung $u_{St}$, die die Synchronmaschine 2 steuert, mit einer zusätzlichen Steuerspannung $u_{az}$ überlagert, wobei die zusätzliche Steuerspannung $u_{az}$ mittels der Vorrichtung 34 erzeugt wird. Dieser Vorrichtung 34 zur Erzeugung einer zusätzlichen Steuerspannung $u_{az}$ wird einerseits ein drehzahlproportionales Signal $u_{Ist}$ vom Tachogenerator 4 und eine der Zwischenkreisspannung proportionale Spannung $U_d$ zugeführt. Solange beispielsweise der Strangstrom $i_S$ abkommutiert und der Strangstrom $i_T$ aufkommutiert, wird die zusätzliche Steuerspannung $u_{az}$ der Steuerspannung $u_{St}$ überlagert. Das Kommutierungsende wird mittels der Vorrichtung 38 ermittelt. Dabei werden die Strangströme $i_R$ und $i_S$ einem Auswahlglied 40 zur Messung des abkommutierenden Stromes der Vorrichtung 38 zugeführt. Dieses Auswahlglied 40 erzeugt aus den beiden Strangströmen $i_R$ und $i_S$, gemäß der Gleichung $i_R + i_S + i_T = 0$, den dritten Strangstrom $i_T$. Jeder Strangstrom $i_R$, $i_S$ und $i_T$ wird jeweils einem Schalter zugeführt, dessen Ausgänge elektrisch parallel geschaltet sind. Diese Schalter des Auswahlgliedes 40 werden mittels einer Auswerteelektronik für die Flanken der Lagesignale und den Lagesignalen des Rotorlagegebers 6 betätigt. Durch dieses Auswahlglied 40 wird der abkommutierende Strangstrom ermittelt, d.h. in diesem Beispiel der Strangstrom $i_S$. Dieser Strangstrom $i_S$ wird einem Betragsbildner 42 zugeführt, dessen Ausgang mit einem Schwellenwertschalter 44 verknüpft ist. Der Schwellenwertschalter 44 erzeugt ein Ausgangssignal, sobald der abkommutierende Strangstrom $i_S$ den Wert Null erreicht. Mit der Ausssendung des Ausgangssignals, daß das Kommutierungsende dokumentiert, wird der Schalter 32 geöffnet und die zusätzliche Steuerspannung $u_{az}$ wird nicht mehr der Steuerspannung $u_{St}$ überlagert.

Da der Stromanstieg im abkommutierenden Strang S im Mittel ungleich dem Stromanstieg im aufkommutierenden Strang T im Mittel ist, kann es vorkommen, daß zum Zeitpunkt, bei dem der Strangstrom $i_S$ im Strang S bereits abkommutiert ist, der Strangstrom $i_T$ im Strang T erst beispielsweise 80 % seines Sollwertes erreicht hat. Dadurch liegt am abkommutierenden Strang S im Mittel eine größer Spannung an, als an dem aufkommutierenden Strang T. Die Folge ist, daß der Strom $i_R$ im Strang R und die Leistung einbricht. Um dies zu verhindern, wird die zusätzliche Steuerspannung $u_{az}$ der Steuerspannung $u_{St}$ derart überlagert, daß im Mittel der Stromabstieg $\overline{di_S/dt}$ im abkommutierenden Strang S gleich ist im Mittel dem negativen Stromanstieg $\overline{di_T/dt}$ im aufkommutierenden Strang T. Anhand dieser Bedingung läßt sich für jedes Steuerverfahren eine Beziehung angeben, aus der die Amplitude $a_z$ der zusätzlichen Steuerspannung $u_{az}$ sich ableiten läßt. Unter der Voraussetzung einer konstanten Aussteuerung, d.h. einer hochfrequenten dreieckförmigen Abtastspannung wird eine Steuergleichspannung überlagert, und der für die zusätzliche Steuerspannung $u_{az}$ allgemein gültigen Bedingung, nämlich $\overline{di_S/dt} = -\overline{di_T/dt}$, gelangt man zu der Beziehung

$$a_z = \frac{1}{3} + \frac{2}{3}\frac{e}{U_d}$$

$$T_K = \frac{|J|\ 3\ L_D}{U_d + 2\ e}$$

für die Amplitude $a_z$ der zusätzlichen Steuerspannung $u_{az}$. Diese Beziehung für die zusätzliche Steuerspannung $u_{az}$ ist von der elektromotorischen Kraft (EMK) e und von der Zwischenkreisspannung proportionalen Spannung $U_d$ abhängig. Der Vorrichtung 34 zur Erzeugung einer zusätzlichen Steuerspannung $u_{az}$ ist eingangsseitig die Ausgangsspannung $u_{Ist}$ des Tachogenerators 4 und die Zwischenkreisspannung $U_d'$ zugeführt. Die Ausgangsspannung $u_{Ist}$, die eine drehzahlproportionale Spannung darstellt, wird mittels eines drehzahlproportionalen Spannungsbildners 46 in die EMK-Spannung e umgewandelt, die einen ersten Eingang x eines Quotientenbildners 48 zugeführt wird. Die Zwischenkreisspannung $U_d'$ wird mittels eines Normiergliedes 50, das im einfachsten Falle ein Spannungsteiler sein kann, in eine der Zwischenkreisspannung proportionale Spannung $U_d$ umgewandelt und einen zweiten Eingang y des Quotientenbildners 48 zugeführt. Am Ausgang des Quotientenbildners 48 steht ein Spannungsquotient $e/U_d$ an. Dieser Spannungsquotient $e/U_d$ wird mit einer Konstanten multipliziert und anschließend einem ersten Eingang eines Summiergliedes 52 zugeführt. Dem zweiten Eingang des Summiergliedes 52 wird eine konstante Spannung mit dem Wert 1/3 $U_{Soll\ max.}$ zugeführt. Am Ausgang 54 der Vorrichtung 34 steht eine zusätzliche Steuerspannung $u_{az}$ an, deren Amplitude $a_z$ aus der Beziehung

$$a_z = \frac{1}{3} + \frac{2}{3}\frac{e}{U_d}$$

abgeleitet werden kann.

Durch diese Schaltungsanordnung wird eine zusätzliche Steuerspannung $u_{az}$ nur während der Kommutierung zweier Strangströme $i_S$ und $i_T$ der Steuerspannung $u_{St}$ des Steuersatzes 10 des Stromrichters 8 überlagert. Dadurch wird erreicht, daß ein Stromeinbruch des Strangstromes $i_R$ in einem nicht an der Kommutierung beteiligten Stranges R wesentlich verringert wird, wodurch auch Drehmomenteinbrüche verringert werden. Somit erhält man eine Schaltungsanordnung, mit der man die Drehmomentwelligkeit eines permanenterregten Drehstrom-Vorschub-Antriebes wesentlich verringern kann.

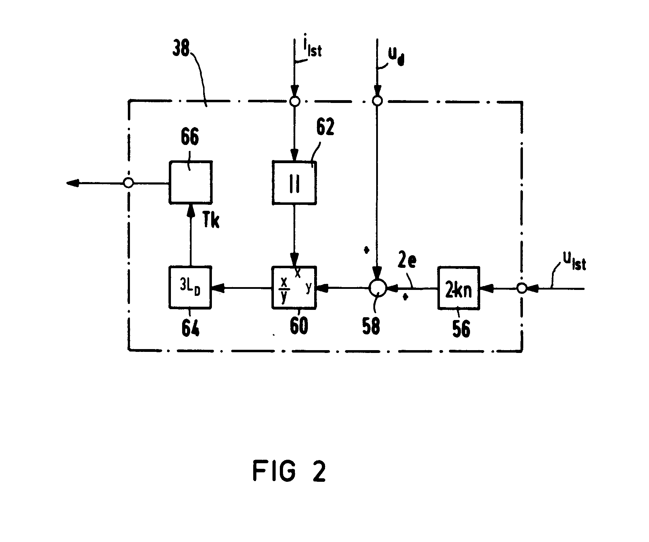

Die FIG 2 zeigt eine weitere Ausführungsform der Vorrichtung 38 zur Ermittlung des Kommutierungsendes. Bei dieser Ausführungsform wird die Kommutierungszeit $T_K$ aus der Beziehung

abgeleitet. Diese Beziehung für die Kommutierungszeit $T_K$ ist aus der Beziehung für den im Mittel abkommutierenden Stromanstieg $\overline{di_S/dt}$ unter Berücksichtigung des genannten Steuerverfahrens, nämlich der Überlagerung einer dreieckförmigen, hochfrequenten Abtastspannung mit einer Steuergleichspannung, abgeleitet. Gemäß der Beziehung der Kommutierungszeit $T_K$ wird der Vorrichtung 38 die Ausgangsspannung $u_{Ist}$ des Tachogenerators 4 zugeführt, die mittels eines drehzahlproportionalen Spannungsbildners 56 in eine EMK-Spannung 2e gewandelt wird, die an dessen Ausgang ansteht. Dieser EMK-Spannung 2e wird die normierte Zwischenkreisspannung $U_d$ mittels eines Summiergliedes 58 dazuaddiert. Die Ausgangsspannung $U_d + 2e$ des Summiergliedes 58 wird einem Eingang y eines Quotientenbildners 60, an dessen anderen Eingang x ein Ausgangsstrombetrag I eines Betragsbildners 62 ansteht, zugeführt. Am Eingang des Betragsbildners 62 steht ein Strom-Istwert $I_{Ist}$ an, der mittels der Einrichtung 26 zur Strom-Istwertbildung aus zwei Strangströmen $i_R$ und $i_S$ nach FIG 1 gebildet wurde. Am Ausgang des Quotientenbildners 60 steht ein Quotientenbetrag $I/(U_d + 2e)$ an, der über ein Konstantglied 64 mit einer Konstanten mit dem Wert 3 $L_D$ multipliziert wird. Am Ausgang dieses Konstantgliedes 64 erhält man die Kommutierungszeit $T_K$, die einem programmierbaren Zeitglied 66 zugeführt ist. Dieses programmierbare Zeitglied 66 enthält beispielsweise einen programmierbaren Rückwärtszähler, der durch die anstehende Kommutierungszeit $T_K$ auf einen der Kommutierungszeit $T_K$ proportionalen Zählerstand gesetzt wird und auf Null rückwärts zählt. Bei Erreichen des Zählerstandes Null ist die Kommutierungszeit $T_K$ verstrichen und der Rückwärtszähler gibt ein Signal ab, das den Schalter 32 nach FIG 1 öffnet.

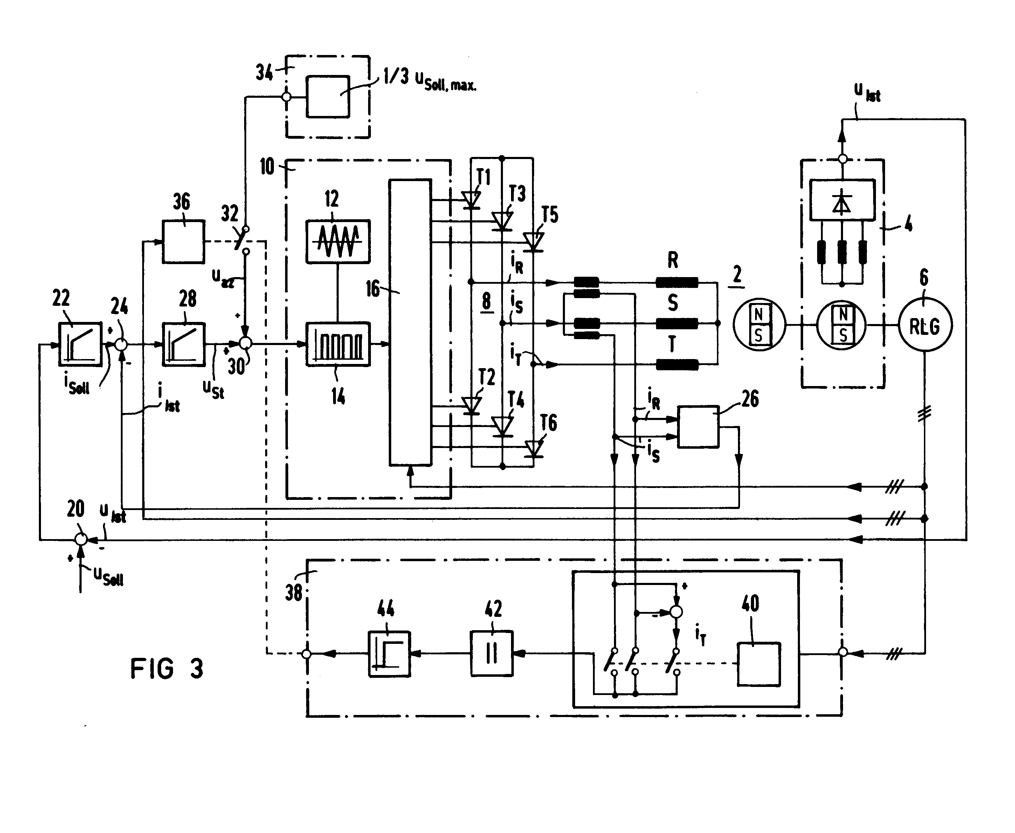

In FIG 3 ist eine besonders einfache Schaltungsanordnung nach FIG 1 dargestellt. Bei dieser Schaltungsanordnung hat sich gegenüber der Schaltungsanordnung nach FIG 1 nur die Vorrichtung 34 geändert. Alle anderen Bauelemente dieser Schaltungsanordnung sind identisch mit den Bauelementen der Schaltungsanordnung nach FIG 1. Deshalb haben auch gleiche Bauelemente gleiche Bezugszeichen. Bei dieser Schaltungsanordnung besteht die Vorrichtung 34 zur Erzeugung einer zusätzlichen Steuerspannung $u_{az}$ aus einer Konstantspannungsquelle mit dem Wert 1/3 $U_{Soll\ max.}$. D.h. aus der Beziehung für die Amplitude $a_z$ der zusätzlichen Steuerspannung $u_{az}$ ist der zweite Summand, nämlich 2/3 $e/U_d$, vernachlässigt worden, da für Drehzahlen aus dem unteren Drehzahlband des Drehstrom-Vorschub-Antriebes der Quotient $e/U_d$ gegen Null geht. Dadurch erhält man eine besonders einfache Schaltungsanordnung zur Durchführung des Verfahrens zur Vermeidung eines Stromeinbruches in einem nicht an eine Kommutierung beteiligten Strang einer dreiphasigen, blockstromgespeisten Synchronmaschine 2.

## Patentansprüche

1. Verfahren zur Vermeidung eines Stromeinbruches in einem nicht an einer Kommutierung beteiligten Strang (R) einer dreiphasigen blockstromgespeisten Synchronmaschine (2), die von einem pulsbreitenmodulierten Stromrichter gespeist wird, während die Strangströme ($i_S$, $i_T$) der beiden anderen Stränge (S, T) kommutieren, **dadurch gekennzeichnet,** daß pulsbreitenmodulierte Impulse für einen Stromrichter (8) der blockstromgespeisten Synchronmaschine (2) derart mittels einer hochfrequenten, dreieckförmigen Abtastspannung und einer Steuerspannung erzeugt werden, daß während der Kommutierung zweier Strangströme ($i_S$, $i_T$) die Steuerspannung ($u_{St}$) um eine zusätzliche Steuerspannung ($u_{az}$) erhöht wird, deren Amplitude sich aus der Beziehung

$$a_z = \frac{1}{3} + \frac{2}{3} \cdot \frac{e}{U_d}$$

ergibt, wobei

e = max. elektromotorische Kraft (EMK) für eine Drehzahl n und
$U_d$ = Zwischenkreisspannung des Stromrichters ist,

wobei der Kommutierungsanfang aus den Lagesignalen eines Rotorlagegebers (6) ermittelt wird und das Kommutierungsende durch den Nulldurchgang des kommutierenden Strangstroms ($i_S$) gegeben ist.

2. Verfahren nach Anspruch 1, **dadurch gekennzeichnet,** daß das Kommutierungsende aus der Beziehung

$$T_K = \frac{|J| \cdot 3 \cdot L_D}{U_d + 2 \cdot e}$$

abgeleitet wird, wobei

$T_K$ = Kommutierungszeit,
$|J|$ = Betrag eines abkommutierenden Stromes,
$U_d$ = Zwischenkreisspannung des Stromrichters,
e = max. elektromotorische Kraft (EMK) für eine Drehzahl n,
$L_D$ = Drehstrominduktivität der Synchronmaschine

ist.

3. Schaltungsanordnung zur Durchführung des Verfahrens nach Anspruch 1 oder 2 mit einer blockstromgespeisten Synchronmaschine (2), die mit einem Stromrichter (8), einem Tachogenerator (4), einem Rotorlagegeber (6) und einem Regler (28) versehen ist, wobei der Ausgang des Reglers (28) mit einem Eingang eines Steuersatzes (10) des Stromrichters (8) verknüpft ist, **dadurch gekennzeichnet,** daß zwischen dem Ausgang des Reglers (28) und dem Eingang des Steuersatzes (10) ein Summierglied (30) angeordnet ist, dessen zweiter Eingang über einen Schalter (32) mit einer Vorrichtung (34) zur Erzeugung einer zusätzlichen Steuerspannung ($u_{az}$) verknüpft ist, wobei dieser Schalter (32) über eine Kommutierungserfassung (36), die mit dem Ausgang des Rotorlagegebers (6) verknüpft ist, einschaltbar und über eine Vorrichtung (38) zur Ermittlung des Kommutierungsendes ausschaltbar ist.

4. Schaltungsanordnung nach Anspruch 3, **dadurch gekennzeichnet,** daß die Vorrichtung (34) zur Erzeugung einer zusätzlichen Spannung ($u_{az}$) eingangsseitig einerseits mit dem Tachogenerator (4) und andererseits mit dem Zwischenkreis des Stromrichters (8) verknüpft ist, wobei die Ausgangsspannung ($u_{Ist}$) des Tachogenerators (4) über einen drehzahlproportionalen Spannungsbildner (46) mit einem ersten Eingang (x) eines Quotientenbildners (48) verbunden ist, dessen zweiter Eingang (y) über ein Normierglied (50) mit dem Zwischenkreis des Stromrichters (8) verknüpft ist, und ausgangsseitig mit einem Summierglied (52), dessen einer Eingang mit einer Spannungsquelle und dessen anderer Eingang über ein Konstantglied mit dem Ausgang des Quotientenbildners (48) verbunden sind.

5. Schaltungsanordnung nach Anspruch 3, **dadurch gekennzeichnet,** daß die Vorrichtung (38) zur Ermittlung des Kommutierungsendes eingangsseitig mit einem Auswahlglied (40) zur Messung des abkommutierenden Stromes, dessen Ausgang über einen Betragbildner (42) mit einem Schwellwertschalter (44) verbunden ist, und ausgangsseitig mit dem Ausgang des Schwellwertschalters (44) verknüpft sind.

6. Schaltungsanordnung nach Anspruch 3, **dadurch gekennzeichnet,** daß die Vorrichtung (38) zur Ermittlung des Kommutierungsendes eingangsseitig einen drehzahlproportionalen Spannungsbildner (56) hat, dessen Ausgang über ein Summierglied (58) mit einem Quotientenbildner (60) verbunden ist, wobei am zweiten Eingang dieses Summiergliedes (58) die Zwischenkreisspannung ($U_d$) ansteht und ein erster Eingang (x) des Quotientenbildners (60) mit dem Ausgang eines Betragsbildners (62), an dessen Eingang ein Stromistwert ($i_{Ist}$) ansteht, verbunden ist, und ausgangsseitig ein programmierbares Zeitglied (66), aufweist, dessen Eingang über ein Konstantglied (64) mit dem Ausgang des Quotientenbildners (60) verknüpft ist.

**Claims**

1. Method for avoiding a current break in a phase (R) of a three-phase synchronous machine (2), which phase (R) does not participate in a commutation and which synchronous machine (2) is supplied with block-type current and is supplied by a pulse-width-modulated converter, while the phase currents ($i_S$, $i_T$) of the two other phases (S, T) commutate, characterized in that pulse-width-modulated pulses for a converter (8) of the synchronous machine (2) supplied with block-type current are generated by means of a high-frequency, triangular sampling voltage and a control voltage in such a way that during the commutation of the two phase currents ($i_S$, $i_T$) the control voltage ($u_{St}$) is increased by an additional control voltage ($u_{az}$), whose amplitude results from the equation

$$a_z = \frac{1}{3} + \frac{2}{3}\frac{e}{U_d} \quad ,$$

whereby

e = max. electromotive force (EMF) for a speed n and
$U_d$ = intermediate circuit voltage of the converter,

whereby the start of the commutation is determined from the position signals of a rotor position encoder (6) and the end of the commutation is given by the zero crossing of the commutating phase current ($i_S$).

2. Method according to claim 1, characterized in that the end of the commutation is derived from the equation

$$T_K = \frac{|J|\ 3\ L_D}{U_d + 2\ e}$$

whereby

$T_K$ = commutation time,
$|J|$ = amount of a current commutating away,
$U_d$ = intermediate circuit voltage of the converter,
e = max. electromotive force (EMF) for a speed n,
$L_D$ = three-phase current inductance of the synchronous machine.

3. Circuit arrangement for carrying out the method according to claim 1 or 2 with a synchronous machine (2) which is supplied with block-type current and is provided with a converter (8), a tacho-generator (4), a rotor position encoder (6) and a regulator (28), wherein the output of the regulator (28) is linked to an input of trigger equipment (10) of the converter (8), characterized in that a summing element (30) is arranged between the output of the regulator (28) and the input of the trigger equipment (10), the second input of the summing element being linked via a switch (32) to a device (34) for the generation of an additional control voltage ($u_{az}$), wherein this switch (32) can be switched on by means of a commutation acquisition (36) which is linked to the output of the rotor position encoder (6), and can be switched off by means of a device (38) for the determination of the end of the commutation.

4. Circuit arrangement according to claim 3, characterized in that the device (34) for the generation of an additional voltage ($u_{az}$) is linked on the input side on the one hand to the tacho-generator (4) and on the other hand to the intermediate circuit of the converter (8), with the output voltage ($u_{Ist}$) of the tacho-generator (4) being connected via a speed-proportional voltage generator (46) to a first input (x) of a ratio generator (48), the second input (y) of which is linked via a standardizing element (50) to the intermediate circuit of the converter (8), and on the output side to a summing element (52), whose one input is connected to a voltage source and whose other input is connected via a constant element to the output of the ratio generator (48).

5. Circuit arrangement according to claim 3, characterized in that the device (38) for the determination of the end of the commutation is linked on the input side to a selecting element (40) for the measurement of the current commutating away, whose output is connected to a threshold-value switch (44) via an absolute-value generator (42), and on the output side is linked to the output of the threshold-value switch (44).

6. Circuit arrangement according to claim 3, characterized in that the device (38) for the determination of the end of the commutation has on the input side a speed-proportional voltage generator (56), whose output is connected via a summing element (58) to a ratio generator (60), with the intermediate-circuit voltage ($U_d$) being at the second input of this summing element (58) and a first input (x) of the ratio generator (60) being connected to the output of an absolute-value generator (62), at whose input there is an actual current value ($i_{Ist}$), and on the output side has a programmable time element (66), whose input is linked via a constant element (64) to the output of the ratio generator (60).

## Revendications

1. Montage pour éviter une chute de courant dans une phase (R), qui ne participe pas à une commutation, d'une machine synchrone triphasée (2) alimentée par un courant de blocage par un convertisseur statique modulé au moyen d'une modulation d'impulsions en durée, tandis que les courants de phase ($i_S,i_T$) des deux autres phases (S,T) commutent, caractérisé par le fait que des impulsions modulées en durée pour un convertisseur statique (8) de la machine synchrone (2) alimentée par un courant de blocage sont produites au moyen d'une tension triangulaire d'échantillonnage à haute fréquence et d'une tension de commande, que pendant la commutation de deux courants de phase ($i_S,i_T$), la tension de commande ($u_{St}$) est accrue d'une tension de commande supplémentaire ($u_{az}$), dont l'amplitude est fournie par la relation

$$a_z = \frac{1}{3} + \frac{2}{3} \frac{e}{U_d}$$

avec

    e =    force électromotrice maximale (EMK) pour une vitesse de rotation n, et

    $U_d$ =    tension du circuit intermédiaire du convertisseur statique,

le début de la commutation étant détecté à partir des signaux de position d'un capteur (6) de position du rotor, et la fin de la commutation étant déterminée par le passage du zéro du courant de phase ($i_S$) qui commute.

2. Procédé suivant la revendication 1, caractérisé par le fait que la fin de la commutation est tirée de la relation

$$T_K = \frac{|J| \; 3L_D}{U_d + 2\,e}$$

avec

    $T_K$ =    durée de la commutation,

    $|J|$ =    valeur d'un courant qui cesse par commutation,

    $U_d$ =    tension du circuit intermédiaire du convertisseur statique,

    e =    force électromotrice maximale (EMK) pour une vitesse de rotation n,

    $L_D$ =    inductance en courant triphasé de la machine synchrone.

3. Montage pour la mise en oeuvre du procédé suivant la revendication 1 ou 2, comportant une machine synchrone (2) alimentée par un courant de blocage et qui comporte un convertisseur statique (8), un générateur tachymétrique (4), un capteur (6) de la position du rotor et un régulateur (28), et dans lequel la sortie du régulateur (28) est raccordée à une entrée d'une unité de commande (10) du convertisseur statique (28), caractérisé par le fait qu'entre la sortie du régulateur (28) et l'entrée de l'unité de commande (10) est disposé un circuit additionneur (30), dont la seconde entrée est raccordée par l'intermédiaire d'un interrupteur (32) à un dispositif (34) servant à produire une tension de commande supplémentaire ($u_{az}$), cet interrupteur (32) pouvant être fermé par l'intermédiaire d'un circuit de détection de commutation (36), qui est raccordé à la sortie du capteur (6) de la position du rotor, et peut être ouvert par l'intermédiaire d'un dispositif (38) servant à déterminer la fin de la commutation.

4. Montage suivant la revendication 3, caractérisé par le fait que le dispositif (34) servant à produire une tension supplémentaire ($u_{az}$) est raccordé, côté entrée, d'une part au générateur tachymétrique (4) et d'autre part au circuit intermédiaire du convertisseur statique (8), la tension de sortie (u$_{réelle}$) du générateur tachymétrique (4) étant appliquée, par l'intermédiaire d'un dispositif (46) de formation d'une tension proportionnelle à la vitesse de rotation, à une première entrée (x) d'un dispositif (48) de formation de quotient, dont la seconde entrée (y) est raccordée par l'intermédiaire d'un circuit de normalisation (50) au circuit intermédiaire du convertisseur statique (8), et est raccordée, côté sortie, à un circuit additionneur (52), dont une entrée est raccordée à une source de tension et dont l'autre entrée est raccordée par l'intermédiaire d'un circuit à constante à la sortie du dispositif de formation de quotient (48).

5. Montage suivant la revendication 3, caractérisé par le fait que le dispositif (38) servant à déterminer la fin de la commutation est raccordé, côté entrée, à un circuit de sélection (40) servant à mesurer le courant qui cesse par commutation, dont la sortie est raccordée par l'intermédiaire d'un dispositif de formation de la valeur absolue (42) et est raccordée à un commutateur à valeur de seuil (44), et est raccordé, côté sortie, à la sortie du commutateur à valeur de seuil (44).

6. Montage suivant la revendication 3, caractérisé par le fait que le dispositif (38) servant à déterminer la fin de la commutation possède, côté entrée, un dispositif (56) de formation de tension proportionnel à la vitesse de rotation, dont la sortie est raccordée par l'intermédiaire d'un circuit additionneur (58) à un dispositif de formation de quotient (60), la tension (U$_{d}$) du circuit intermédiaire étant appliquée à la seconde entrée de ce circuit additionneur (58) et une entrée (x) du dispositif de formation de quotient (60) étant raccordée à la sortie d'un dispositif de formation de valeur absolue (62), à l'entrée duquel est appliquée une valeur réelle (i$_{réelle}$) du courant, et comporte, côté sortie, un circuit de temporisation programmable (66), dont l'entrée est raccordée par l'intermédiaire d'un circuit à constante (64) à la sortie du dispositif de formation de quotient (60).

FIG 1

FIG 2

FIG 3

EP 0 313 929 B1